Europäisches Patentamt

European Patent Office

Office européen des brevets

(11) Publication number: 0 314 333
A2

# EUROPEAN PATENT APPLICATION

(21) Application number: 88309444.3

(22) Date of filing: 10.10.88

(51) Int. Cl.⁴: G05B 19/18

(30) Priority: 12.10.87 IT 6785487

(43) Date of publication of application:
03.05.89 Bulletin 89/18

(84) Designated Contracting States:
AT BE CH DE ES FR GB LI NL

(71) Applicant: OCN-PPL S.p.A.
Via C. Olivetti 2
I-10015 Ivrea (Turin)(IT)

(72) Inventor: Favareto, Marcello
Via Rocciamelone 13
I-10090 Villarbasse (To)(IT)

(74) Representative: Pears, David Ashley et al
REDDIE & GROSE 16 Theobalds Road
London WC1X 8PL(GB)

(54) Apparatus and method for measuring and correcting machining dimensions.

(57) The measuring apparatus is used on a numerically controlled machining station and comprises an arm (60) carrying at one end a sensor (55) for measuring the machining dimension in an operation of semifinishing a component (40) with an adjustable tool (50). The arm is mounted on the operating headstock (12) of the machining station and is rotatable about an axis which is perpendicular to the axis of the spindle. By rotating the arm from a rest position to a measuring position in which the sensor (55) is disposed in axial alignment with the tool (50) or parallel thereto it is possible during the machining operation to measure the dimension machined by the tool (50) without removing the tool from the spindle (13) of the headstock (12), or removing the component (40) from its own fixing support. Measurement in respect of the dimension being machined is effected before the last finishing pass and makes it possible to calculate possible correction to be made to the tool for finishing the machining operation with precision.

FIG.1

# APPARATUS AND METHOD FOR MEASURING AND CORRECTING MACHINING DIMENSIONS

The present invention relates to an apparatus for measuring and correcting automatically the dimensions involved in machining components in a numerically controlled machining station in which the apparatus comprises a sensor member provided with a stylus capable of sensing a surface of a component machined by a tool mounted on a spindle of an operating headstock. The invention also relates to a corresponding method.

US patent No. 4 583 159 discloses an apparatus for measuring and correcting the dimensions of the surface which is machined in a numerically controlled machine tool, in which a sensing member is mounted on the spindle of the headstock, alternatively in the position of the tool which had been doing the machining work. The sensor measures the machined dimension, for example the diameter of a hole, and, by virtue of comparison with the nominal dimension, makes it possible to detect any error in respect of the diameter of the machined hole and to decide to replace or adjust the tool in order to perform, with precision the operation of machining the subsequent component.

It will be apparent that that measuring procedure makes it possible to provide for "a posteriori" checking of the machined dimensions and will give the result of acceptance or rejection of the measured component whenever it is outside tolerance, without making it possible to recover the component measured with automatic methods. Even when using boring tools provided with mechanical control for micrometric increases in the boring diameter, that correction in respect of diameter is capable of compensating only for systematic errors and relatively slow drift phenomena and it becomes effective only in relation to the component following the measured component which has to be rejected.

Performing a change on the spindle itself as between the tool and the measuring device seriously compromises the performance of high-precision machining operations, for example for producing small-diameter holes. Indeed, the degree of precision of such machining operations is also conditional upon random factors such as for example resilient yielding of the tool due to casual variations in the cutting force. Besides being caused by the condition of wear of the tool, such variations may also be caused by differences in the machining stock to be removed or the hardness of the material, but in particular the inevitable errors in respect of repeatability of locking of the tool in the spindle after having removed the measuring device.

Therefore the known measuring apparatuses which mount the measuring device on the spindle in place of the tool do not make it possible to provide for "in process" correction of the measured dimensions and thus to save the measured component.

The object of the present invention is to provide an apparatus for measuring the dimensions of a component machined by a tool, which can be used during the machining operation, keeping the tool fitted in the spindle.

To this end the apparatus according to the invention is characterized in the manner set forth in claim 1.

In accordance with another aspect of the invention the apparatus is capable of measuring a machined dimension of a component during the maching process, calculating any correction in respect of the tool and making it possible to finish the machining of the same component with the required degree of precision.

These and other features will be more clearly apparent from the following description of a preferred embodiment which is given by way of non-limiting example with reference to the accompanying drawings in which:

Figure 1 is a perspective view of the measuring apparatus according to the invention mounted on a machining station,

Figure 2 is a view in longitudinal section through an arm of the apparatus shown in Figure 1,

Figure 3 is a view in section taken along line III-III in Figure 2,

Figure 4 is a plan view of the apparatus shown in Figure 1,

Figure 5 is a front view of a protection means for the measuring apparatus shown in Figure 1,

Figure 6 is a block diagram of a numerical control unit associated with the machining station in Figure 1,

Figure 7 is a flow chart of instructions relating to a measuring operation,

Figure 8 is a first alternative embodiment of the Figure 1 apparatus, and

Figure 9 is a second alternative embodiment of the apparatus shown in Figure 1.

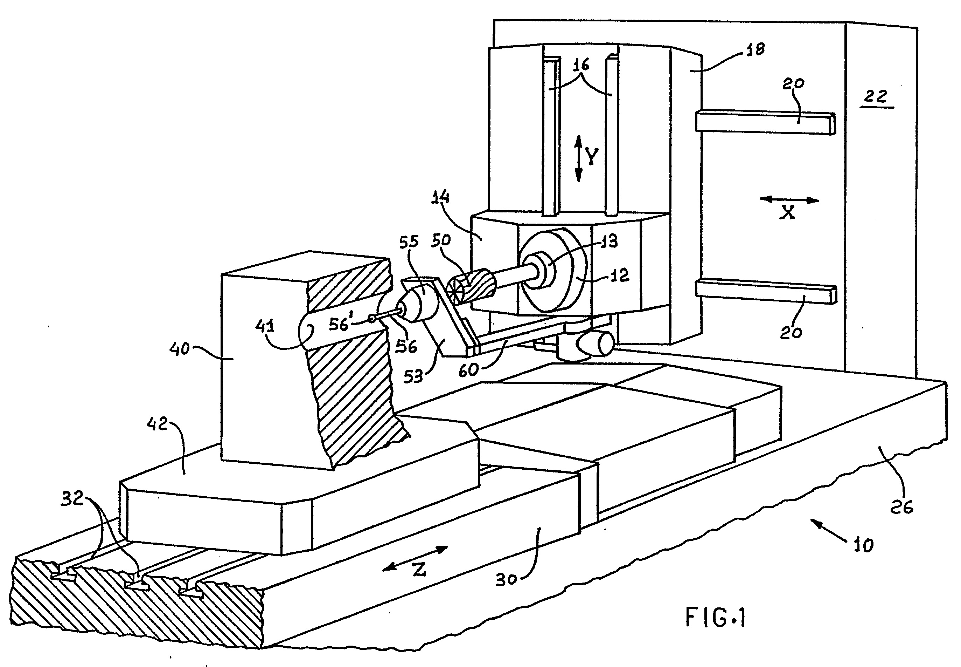

Referring to Figure 1, reference numeral 10 therein denotes a numerically controlled machining station in which a drive headstock 12 is movable along two axes X and Y which are perpendicular to each other and disposed in a vertical plane. The headstock 12 is mounted on a carriage 14 which is slidable in the direction of the vertical axis Y on guides 16 which are fixed on a slide 18. The slide 18 is in turn slidable on guides 20 which are parallel to the horizontal axis X and fixed on a fixed upright portion 22 rigidly connected to a base portion 26.

A component-carrying table 30 is slidable on the base portion 26 in the direction Z perpendicular to the axes X and Y. The component-carrying table 30 is provided with grooves 32 of an inverted T-shape to permit locking of a component 40 which is to be worked, fixed on a support block 42.

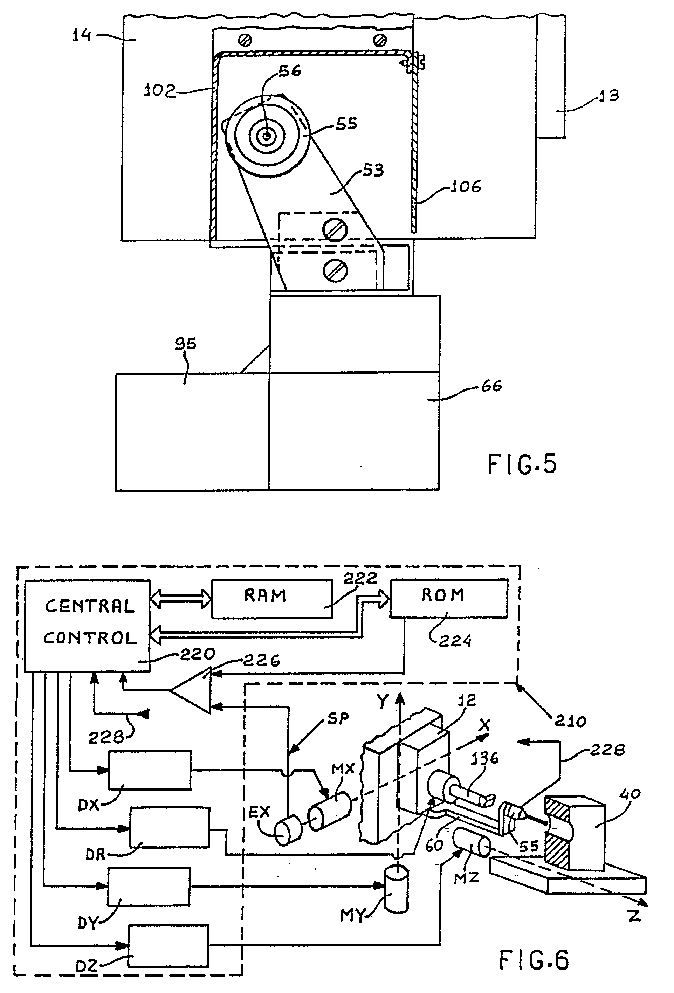

The carriage 14, the slide 18 and the table 30 are moved independently by three motors MX, MY and MZ (see Figure 6) respectively in the direction of the three axes X, Y and Z. Each motor is controlled by its own control circuit as indicated at DX, DY and DZ respectively.

The following description will refer by way of non-limiting example to a measurement in respect of the diameter produced in a boring operation using a tool 50 mounted on the rotary spindle 13 of the headstock 12. The improved performances of the measuring apparatus according to the invention are achieved in combination with the use of tools which permit a micrometric variation in the machined diameter without removing the tool from the spindle. Reference will be made by way of example to drilling tools with cutting members which are adjustable with a micrometric screw; boring tools (reamers) with devices for incremental correction of the diameter produced, which can be actuated by means of mechanical controls mounted on the headstock of the machine tool or which are actuated by way of the axis of the spindle; and faceting heads in which the machined dimension is produced by controlling the position of the tool on the headstock with a numerical control shaft.

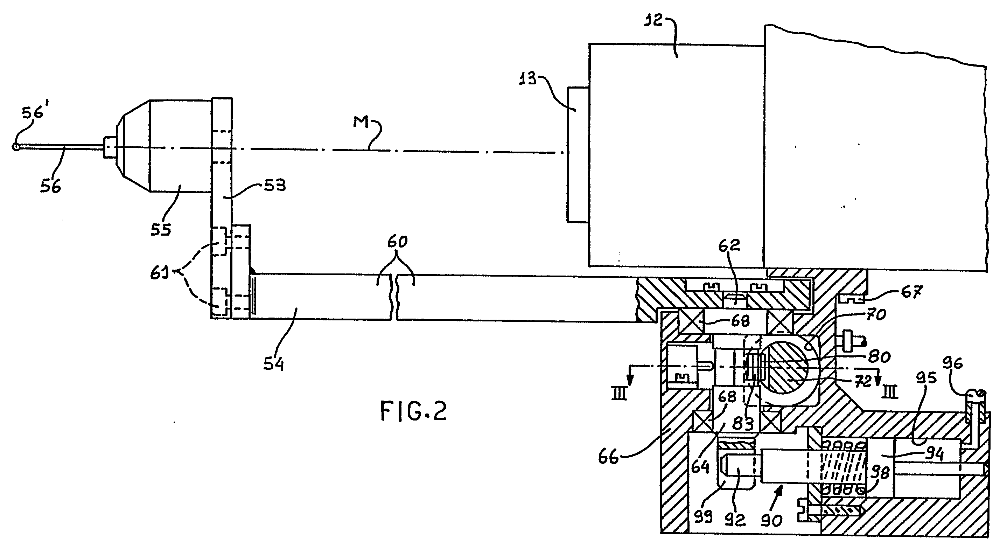

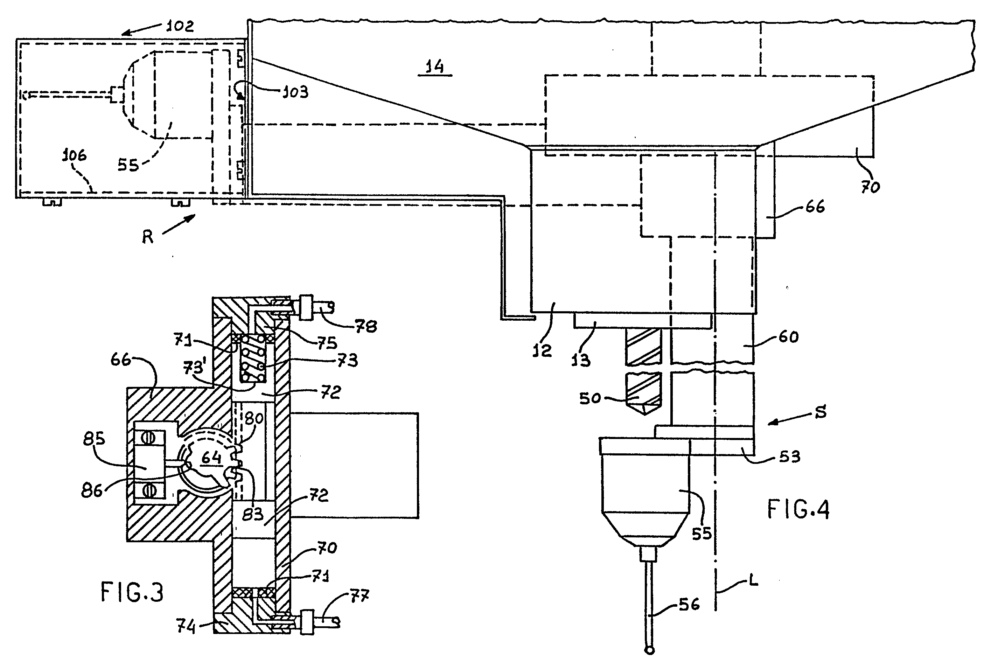

Mounted underneath the headstock 12 is an arm 60 which extends parallel to the plane X-Z and which is rotatable with respect to the headstock 12 about an axis perpendicular to the axis of the spindle. The arm 60 (see Figures 2 and 4) is fixed on an end 62 of a pin 64 which is rotatable on a support 66 fixed to the headstock 12 by means of screws 67. Mounted on a bracket 53 fixed to a free end 54 of the arm 60 is a sensor member 55 disposed in an offset position with respect to the longitudinal axis of the arm 60 and provided with a stylus 56 which is used for sensing the surface of components being machined. In that way the stylus 56 is disposed in axial alignment with the axis M of the spindle 13.

The sensor member 55 is generally known so that it is not described in detail herein, and it may be for example of electronic type capable of generating a signal whenever a spherical tip 56' of the stylus 56 comes into contact with a metal surface. The pin 64 is mounted on two rolling bearings 68 which are housed in the support 66 for making the arm smooth-running and precise in its movements. In order to increase the rigidity of the connection between the pin 64 and the support 66, the rolling bearings 68 may be suitably replaced by a support involving a hydraulic or pneumatic support means of known type which is not illustrated in the drawing.

The pin 64 is rotated by a hydraulic cylinder unit 70 (see Figure 3) which is fixed with respect to the support 66, by means of a piston 72 which is slidable in the cylinder 70 in both directions. The piston 72 is moved by oil under pressure which is supplied selectively to the two ends 74 and 75 of the cylinder unit 70 by way of two conduits 77 and 78 respectively.

The piston 72 transmits the movement to the pin 64 by means of a rack 80 disposed in a central region of the piston 72 and meshing with a sprocket 83 which is fixed to the pin 64. The travel of the piston 72 is limited by the distance between the two ends 74 and 75 of the cylinder unit 70 and is such as to cause the pin 64 to perform a rotary movement through 90°. In that way the arm 60 is rotated from a rest position R shown in broken lines in Figure 4 to an operative position S in which the arm 60 is disposed substantially parallel to the axis of the spindle 13. Consequently the stylus 56 of the sensor 55 is disposed precisely in axial alignment with the spindle 13.

In order to prevent the arm 60 stopping excessively abruptly, the travel movement of the piston 72 is damped by two elements 71 (see Figure 3) of resilient yielding material which are disposed at the ends 74 and 75 of the cylinder unit 70. In addition, in order to improve the damping effect of the element 71 at the position which is towards the end 75, a spring 73 is disposed within a hole 73' provided in the piston 72. The spring 73 is compressed when the piston 72 is urged towards the end 75 and thus absorbs a part of the kinetic energy of the unit consisting of the piston 72 and the arm 60 while the arm 60 is being stopped in the operative position S (see Figure 4).

A microswitch 85 (see Figure 3) which cooperates with a cam 86 on the pin 64 signals that the arm 60 is in the operative position S. The arm 60 is locked in the position S by means of a bolt 90 (see Figure 2) which is slidable radially with respect to the pin 64. The bolt 90 comprises a latch portion 92 which is fixed with respect to a piston 94 slidable in a cylinder 95. The piston 94 is moved from right to left in Figure 1 by compressed oil supplied to the cylinder 95 by way of a pipe 96.

When the pressurized oil is passed into the cylinder 95, the latch portion 92 is urged into an opening 99 in the pin 64, overcoming the force of a spring 98. The opening 99 is oriented with respect to the arm 60 in such a way that when the arm 60 is precisely in the operative position S (see Figure 4), the opening 99 is oriented parallel to the latch portion 92 which can thus pass into the opening 99 and lock the pin 64 with a high degree of accuracy.

When the pin 64 is locked in that way, fine adjustment of the position of the axis of the stylus 56 is effected in such a way that it coincides with the axis M of the spindle 13 (see Figure 2) by adjusting screws 61 providing the connection between the bracket 53 and the arm 60.

When the arm 60 is in the rest position R, the sensor member 55 is protected from chips and spray of cooling liquid by a guard (see Figures 4 and 5) formed by a metal box member 102 fixed to a side 103 of the carriage 14. A side wall of the box member 102 which is directed towards the spindle is formed by a sheet 106 of resilient flexible material which is caused to move aside by the sensor 55 when it passes into or comes out of the box member 102.

The offset between the sensor member 55 and the longitudinal axis L of the arm 60 makes it possible to increase the distance between the sensor 55 in the rest position R and the machining zone in front of the spindle 13 where chips and cooling liquid spray occur.

The machining station 10 (see Figure 1) is controlled by a conventional numerical control unit 210 (see Figure 6), the control unit being programmed to process the signals in respect of movement of the headstock 12 and the table 30 and the signals generated by the sensor 55 to effect measurements in respect of the dimensions of machined surfaces, to effect comparisons between the measurements and the corresponding nominal values and finally to calculate the whole of the corrections required for precise machining of a component.

Therefore, to carry out the measurement operation, for example in respect of the diameter of a hole 41 (see Figure 1), it is not necessary either to remove the tool 50 from the spindle 13 or to move the headstock 12 from the position in which the hole was machined. It is sufficient to move the component 40 away in the direction of the axis Z to set the arm 60 in movement towards the operative position S (see Figure 4) and to move it back again to effect the operation of measuring the diameter which has just been machined. It will be clear therefore that, the sensor 55 being positioned on the effective axis of the machined holes, a single movement of the headstock 12, for example in the direction of the axis X, from the machining position until the stylus 56 of the sensor 55 touches the surface of the hole 41 makes it possible to measure the machined radius of the hole.

The control unit 210 (see Figure 6) comprises a central control means 220 connected as is known to a read only memory 222 and a random access memory 224. The signal in respect of displacement, as indicated in SP, for example along the axis X, is generated by an encoder EX connected to the motor MX and applied to a comparator 226. The comparator 226 compares the signal SP which is representative of the value of the machined radius of the hole 41 to the final value contained in the RAM 224. The result of the comparison operation represents the thickness of stock which is still to be removed and is passed to the control means 220 which by way of an adjusting circuit DR provides for adjusting the tool 136 to the appropriate value for carrying out the finishing pass. The sensor 55 is connected by a line 228 to the control means 220 for passing a stop signal in respect of the motor MX when the stylus 56 reaches the position of touching the inside surface of the hole 41.

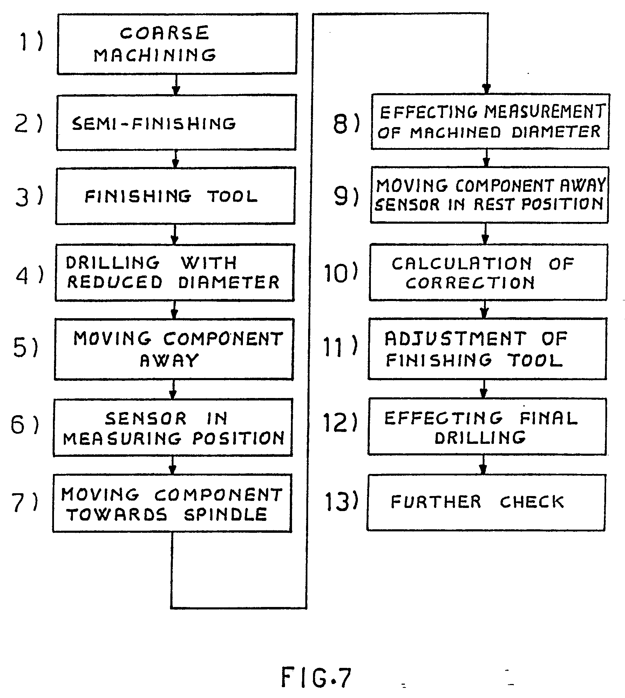

The procedure for effecting measurement and correction of the machined dimension is diagrammatically indicated in Figure 7 by a flow chart in respect of the operations performed. For the sake of simplicity reference is made to producing the hole 41 (see Figure 1) in the component 40, although it will be appreciated that the procedure may be also applied more generally to other types of machining operations which can be carried out on the machining station 10.

The steps in the procedure are as follows:

1) and 2): coarse machining and semi-finishing machining of the hole are performed using suitable tools;

3): a finishing tool provided with incremental correction in respect of the machined diameter is fitted to the spindle 13 (see Figure 1);

4): a drilling pass is performed, with a diameter which is under-dimensioned with respect to the final value;

5): the component 40 is moved away from the spindle 13 in the direction of the axis Z;

6): the arm 60 is rotated from position R (see Figure 4) to position S;

7): the component 40 is moved towards the spindle 13 until the stylus of the sensor 55 passes into the hole 41;

8): the headstock 12 is displaced in the direction of the axis X until the stylus 56 touches a wall of the hole;

9): the arm 60 is rotated into the rest position R after the component 40 has again been moved away from the spindle 13;

10): the control unit performs the necessary calculations for establishing the possible value of correction in respect of the diameter of the hole;

11): the finishing tool is automatically adjusted on the basis of the correction calculated in step 10);

12): the finishing tool effects final boring to the nominal diameter; and

13): any further check , by repeating steps 5) to 11).

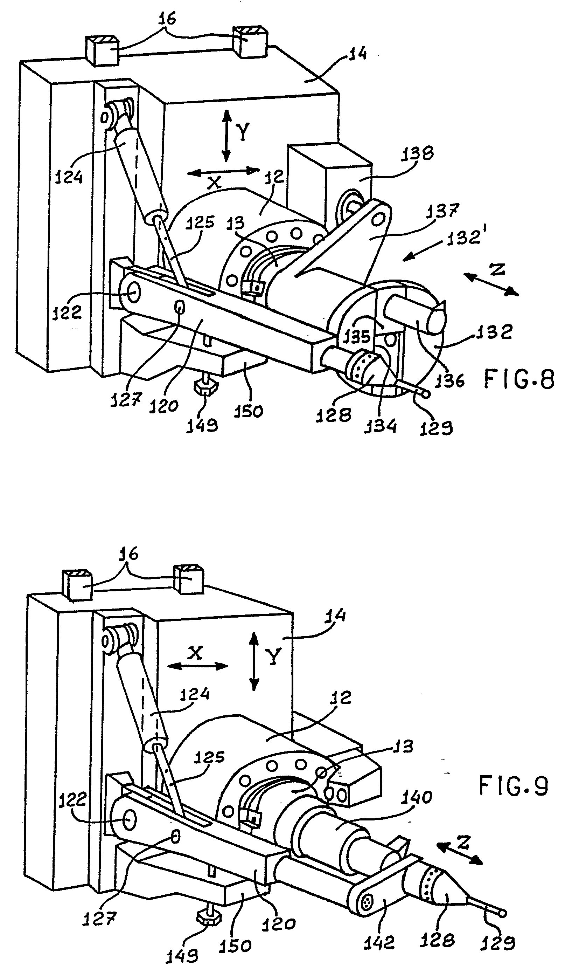

In two further embodiments of the invention the measuring apparatus is shown in Figures 7 and 8 in which the same references denote parts which are common to the two Figures.

The measuring apparatus comprises an arm 120 which is movable in a vertical plane parallel to the axes Y-Z. The arm 120 is pivoted at one end on a pin 122 perpendicular to the axis of the spindle and to the axis Z and mounted on the headstock 12 in a position which is substantially lateral with respect to the spindle 13. The arm 120 is raised or lowered by means of a hydraulic cylinder 124 which is pivoted to the headstock 12 and which has a slidable rod 125 pivoted to the arm 120 at an intermediate point 127. Mounted on the free end is a sensor member 128 similar to that described hereinbefore. This second embodiment is particularly indicated when the spindle 13 carries tools for boring operations, of substantial length, such as boring heads 132 (see Figure 7) or boring bars 140 which involve automatic adjustment (Figure 8).

The boring heads are used in known fashion for machining holes of large diameter (exceeding 100mm) and comprise a circular disc 132 (see Figure 7) which is rotatable on the spindle 13 and carries a diametrally grooved guide 134 within which slides a block 135 supporting a reamer 136. The block 135 is displaced radially for varying the boring diameter by means of a mechanical transmission 137 connected to a known unit 138 for controlling the boring diameter.

In this case it is not appropriate to put the sensor 128 in front of the tool and in axial alignment with the spindle since the substantial distance of the arm 120 which supports the sensor from the axis of the spindle 13 would prejudice the rigidity of the measuring apparatus. Therefore the sensor 128 is fixed parallel to the axis of the spindle on the end of the arm 120 in axial aligment with the arm, with the stylus 129 being caused to project by about half its length beyond the end of the reamer 136.

However when the boring bar 140 (see Figure 8) is used, it is also possible to mount the sensor 128 in axial aligment with the spindle 13, by virtue of the smaller distance of the bar 140 from the axis of the spindle 13, than the boring head 136. In that case the sensor 128 is fixed on a bracket 142 which is fixed on the free end of the arm 120 perpendicularly to the longitudinal axis of the arm 120.

The operative position of the arm 120 which is shown in Figures 7 and 8 is adjusted with precision by a stop screw 149 which is rotatable on a shelf portion 150 which is fixed with respect to the headstock 12. The rest position is not shown in the drawing and is reached by rotating the arm 120 upwardly by means of the cylinder 124.

It will be appreciated that the apparatus for measuring and correcting automatically machining dimensions in accordance with the invention may be the subject of modifications, additions or substitution of parts without thereby departing from the scope of the invention.

## Claims

1. Apparatus for measuring and correcting automatically the machining dimensions in a numerically controlled machining station, the apparatus comprising a sensor (55) provided with a stylus (56) capable of sensing a surface (41) of a component (40) machined by a tool (50) mounted on a spindle (15) of an operating headstock (12), characterized in that the sensor (55) is mounted permanently on a support (60) which is movable on the headstock (12) from a rest position to an operative position in which the sensor (55) is positioned between the tool (50) and the component (40), whereby the tool (50) remains mounted on the spindle (13) during the sensing of the said surface (41).

2. Apparatus according to claim 1, characterized in that the support is formed by an arm (60) pivoted on the headstock (12) and rotatable about an axis perpendicular to the axis of the spindle (13).

3. Apparatus according to claim 2, characterized in that the arm (60) is rigidly connected to a pin (64) rotatable on the headstock (12) about the said perpendicular axis, actuating means (70) being provided for rotating the pin (64) in one direction and in the opposite direction in such a way as to rotate the arm (60) from the rest position to the operative position and vice-versa.

4. Apparatus according to claim 3, characterized in that the actuating means (70) comprise a piston (72) movable between two ends of a cylinder (70), the piston comprising a rack (80) meshing with a sprocket (83) which is fixed with respect to the pin (64), the piston having a travel movement limited by the said two ends such that the pin is rotated through 90° in one direction and the other.

5. Apparatus according to claim 3 or 4, characterized by means (90) for locking the pin (64) comprising a locking member (90) which is movable with respect to and cooperating selectively with the pin (64) for blocking the rotary movement of the pin in a predetermined position.

6. Apparatus according to claim 5, characterized in that the locking member (90) slides in a direction perpendicular to the axis of the pin (64) from a position outside the pin to a locking position in which the locking member (90) is accommodated in an opening (99) in the pin (64).

7. Apparatus according to claim 6, characterized in that the locking member (90) comprises a latch portion (92) capable of engaging the opening (99) and fixed with respect to a piston (94) which is moved selectively within a cylinder (95) by pressurized oil in the direction of engagement into the opening (99) and urged by a spring (98) in the opposite direction in the absence of the oil pressure.

8. Apparatus according to claim 5, 6 or 7, characterized in that the said predetermined position of the pin (64) corresponds to the operative position of the arm (60).

9. Apparatus according to any of the preceding claims, characterized in that the stylus (56) is coaxial with the axis of the spindle (13) when the arm (60) is in the operative position.

10. Apparatus according to any of the preceding claims, characterized in that the stylus (56) is parallel to the axis of the spindle (13) when the arm (60) is in the operative position.

11. Apparatus according to any of the preceding claims, characterized by means for protecting the sensor (55) from machining chips and/or cooling liquid when the arm (60) is in the rest position, the protecting means comprising a box (102) which is fixed to the operating headstock (12) and having a movable wall (106) formed by a flexible and resilient element, whereby the sensor (55) freely passes into and out of the box (102) by flexing the flexible element (106).

12. Apparatus according to claim 11, characterized in that the sensor (55) is mounted on a bracket (53) connected to the arm (60) in an offset position with respect to a longitudinal axis of the arm and displaced in the direction of the rest position to increase the distance of the sensor (55) from the chips and liquid when the sensor is enclosed in the box (102).

13. Apparatus according to any of the preceding claims, in which a machining station is controlled by an electronic control unit for controlling the machining of a surface of a component which is machined until reaching a predetermined dimension, the component being machined by an adjustable tool mounted on the spindle, characterized in that the sensor (55) is controlled by the electronic unit in such a way as to measure an intermediate dimension and in that the tool is adjusted by the control unit in such a way as to complete the machining of the component to the predetermined dimension.

14. Apparatus according to claim 13, characterized in that the adjustable tool comprises a boring head.

15. Apparatus according to claim 13, characterized in that the adjustable tool is a boring bar with automatic adjustment.

16. A method of measuring and correcting automatically the machining dimensions in a numerically controlled mnachining station comprising a sensor member mounted on an arm pivoted on an operating headstock of the station and movable between a rest position and an operative position, and in which the machining operation comprises operations for removing a predetermined thickness of stock with respect to a nominal dimension with adjustable tools, the method comprising the following steps:

1) removal with the adjustable tool of a thickness of stock which is less than said predetermined thickness,

2) moving the component away from the tool in the direction of the axis Z,

3) positioning the arm in the operative position,

4) moving the component towards said arm,

5) displacing the headstock in the direction of the axis X for measuring the dimension machined by the tool,

6) comparing the measured dimension to the nominal dimension to determine a further thickness of stock to be removed,

7) adjusting the adjustable tool by an amount equal to this further thickness,

8) moving the component away from the arm and returning the arm to the rest position, and

9) performing an operation for removal of the said further thickness of stock with the adjusted tool.

17. A method according to claim 14, characterized in that step 5) provides for use of a sensor provided with a stylus for sensing the component being machined, the sensor being capable of generating a signal when the stylus touches the component.

FIG·1

EP 0 314 333 A2

FIG.2

EP 0 314 333 A2

FIG.3

FIG.4

EP 0 314 333 A2

FIG.5

FIG.6

1) COARSE MACHINING

2) SEMI-FINISHING

3) FINISHING TOOL

4) DRILLING WITH REDUCED DIAMETER

5) MOVING COMPONENT AWAY

6) SENSOR IN MEASURING POSITION

7) MOVING COMPONENT TOWARDS SPINDLE

8) EFFECTING MEASUREMENT OF MACHINED DIAMETER

9) MOVING COMPONENT AWAY SENSOR IN REST POSITION

10) CALCULATION OF CORRECTION

11) ADJUSTMENT OF FINISHING TOOL

12) EFFECTING FINAL DRILLING

13) FURTHER CHECK

FIG.7

FIG.8

FIG.9